(19) **Europäisches Patentamt**

**European Patent Office**

**Office européen des brevets**

(11) **EP 0 833 972 B1**

(12) **FASCICULE DE BREVET EUROPEEN**

(45) Date de publication et mention
de la délivrance du brevet:
**22.09.1999 Bulletin 1999/38**

(51) Int Cl.⁶: **D04H 1/46**, D04H 18/00

(21) Numéro de dépôt: **96922939.2**

(22) Date de dépôt: **18.06.1996**

(86) Numéro de dépôt international:
**PCT/FR96/00933**

(87) Numéro de publication internationale:
**WO 97/00345 (03.01.1997 Gazette 1997/02)**

(54) **PROCEDE ET APPAREIL POUR LA FABRICATION DE PIECES ANNULAIRES EN MATERIAU COMPOSITE ET DE PREFORMES POUR CES PIECES**

VERFAHREN UND VORRICHTUNG ZUR HERSTELLUNG VON RINGFÖRMIGEN WERKSTÜCKEN AUS VERBUNDMATERIAL UND VORFORMLINGE FÜR DIESE WERKSTÜCKE

METHODS AND APPARATUS FOR MAKING RING-SHAPED PARTS OUT OF A COMPOSITE MATERIAL, AS WELL AS PREFORMS THEREFOR

(84) Etats contractants désignés:
**DE FR GB**

(30) Priorité: **19.06.1995 FR 9507280**

(43) Date de publication de la demande:
**08.04.1998 Bulletin 1998/15**

(73) Titulaire: **SOCIETE NATIONALE D'ETUDE ET DE CONSTRUCTION DE MOTEURS D'AVIATION, "S.N.E.C.M.A."**
**75015 Paris (FR)**

(72) Inventeurs:
• **OLRY, Pierre**
**F-33000 Bordeaux (FR)**
• **COUPE, Dominique**
**F-33185 Le Haillan (FR)**
• **JOUIN, Jean-Marie**
**69100 Villeurbanne (FR)**

(74) Mandataire: **Joly, Jean-Jacques**
**Cabinet Beau de Loménie**
**158, rue de l'Université**
**75340 Paris Cédex 07 (FR)**

(56) Documents cités:
EP-A- 0 530 741    FR-A- 2 506 672
FR-A- 2 584 107    FR-A- 2 683 889

## Description

L'invention concerne des procédés et des appareils pour la fabrication de pièces annulaires en matériau composite et de préformes pour ces pièces, ainsi que les pièces et les préformes elles-mêmes. Plus particulièrement, il s'agit de procédés et d'appareils avec lesquels des préformes sont fabriquées par enroulement d'une bande fibreuse sur un mandrin, l'ensemble de couches enroulées étant destiné à être découpé en anneaux soit avant soit après densification par une matrice.

Les procédés utilisés habituellement pour la fabrication des préformes pour des pièces en matériau composite consistent en l'empilage des couches planes de matériau fibreux, en la découpe ou l'usinage de l'ensemble pour obtenir une préforme ayant une forme désirée, et en la densification de la préforme. Quand la pièce à fabriquer est un disque de frein, ou une autre pièce annulaire, environ la moitié du poids de la matière est perdue en fabriquant les préformes annulaires à partir de l'ensemble de couches empilées.

Pour réduire ces chutes, plusieurs propositions ont été faites. L'une d'entre elles consiste en l'assemblage d'une préforme annulaire à densifier à partir de couches de matériau fibreux formées chacune de secteurs juxtaposés, ces couches étant empilées. Cette méthode réduit les pertes mais ne les supprime pas.

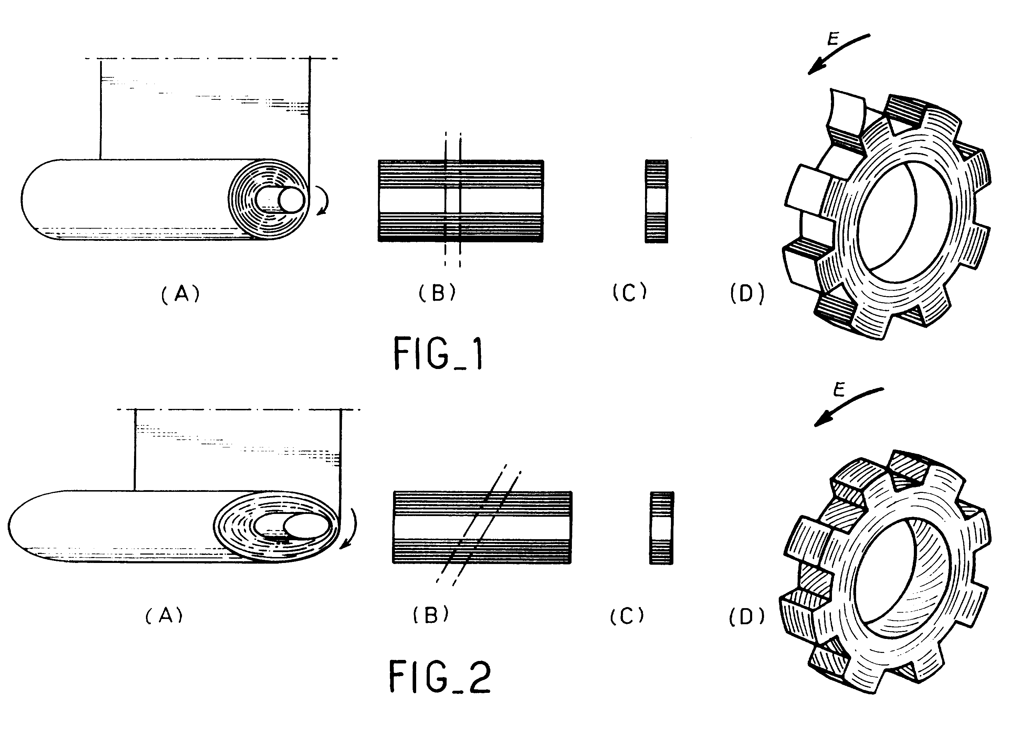

Une autre proposition fait l'objet de la demande de brevet FR-A-2 506 672, et est décrite ci-dessous en référence aux figures 1A à 1D. Il est suggéré de fabriquer des éléments annulaires ou cylindriques par bobinage d'une bande fibreuse sur un mandrin cylindrique (figure 1A) afin de produire un manchon cylindrique (figure 1B). Pendant le bobinage, les couches superposées sont liées les unes aux autres par aiguilletage. Le manchon cylindrique peut être découpé perpendiculairement à son axe pour obtenir des préformes annulaires à densifier (figure 1C).

Un procédé similaire à ce dernier est décrit, également, dans la demande de brevet FR-A-2 584 107.

Cette dernière méthode évite les chutes de matière mais les pièces fabriquées à partir des préformes produites par ce procédé ont des caractéristiques désavantageuses qui se manifestent, notamment, pendant l'utilisation de celles-ci. Quand il s'agit de disques de frein, ceux-ci sont soumis, pendant leur utilisation, à des efforts de cisaillement dans une direction tangentielle. Les efforts se manifestent notamment au niveau des encoches qui sont pratiquées dans la couronne intérieure ou la couronne extérieure (figure 1D) pour la liaison du disque avec une partie mobile ou une partie fixe. De tels efforts de cisaillement, E, peuvent entraîner un délaminage de la pièce, c'est-à-dire une destruction par séparation entre couches de la préforme.

Selon l'un de ses aspects, l'invention a pour objet de fournir un procédé et un appareil permettant de réaliser des préformes pour des pièces annulaires en matériau composite ayant une bonne résistance au délaminage, tout en limitant les pertes de matière entraînées par le mise en oeuvre du procédé.

Ce but est atteint grâce à un procédé et appareil selon lesquels, conformément à l'invention, une bande de matière fibreuse est enroulée autour d'un mandrin elliptique afin de former un manchon elliptique. Ce manchon elliptique peut être découpé obliquement afin de produire des préformes annulaires à densifier ou il peut servir lui-même de préforme à densifier, le découpe étant reportée à la fin de l'une ou plusieurs des étapes de densification. Le plan de découpe est incliné par rapport à une coupe droite du manchon elliptique, c'est à dire que le plan de découpe n'est pas perpendiculaire à l'axe du manchon. Les parties intérieures et extérieures des anneaux découpés sont usinées afin d'obtenir des éléments circulaires.

Le procédé et l'appareil indiqué ci-dessus utilisent le fait que la projection d'une ellipse dans un plan passant par le grand axe de celle-ci, et faisant un angle $\alpha$ par rapport au plan de l'ellipse, est un cercle de diamètre égal au grand axe de l'ellipse. L'angle $\alpha$ peut être calculé d'après la formule:

$$\cos\alpha = b/a$$

où

$2a$ = le grand axe de l'ellipse et $2b$ = le petit axe de l'ellipse.

Le principe de cet aspect de l'invention est illustré sur les figures 2A à 2D.

La figure 2A montre l'enroulement d'une bande de matière fibreuse autour d'un mandrin elliptique et la figure 2B représente le plan de découpe du manchon elliptique produit par l'ensemble des couches superposées. Dans cet exemple, l'anneau découpé dans le manchon est parfaitement circulaire à mi-largeur mais elliptique à la périphérie intérieure et extérieure. Le plan de découpe peut également être choisi pour rendre l'anneau circulaire à sa périphérie intérieure ou extérieure, ou à une autre distance des périphéries de l'anneau. (En théorie un plan de découpe pourrait être choisi qui rendrait l'anneau découpé elliptique partout dans sa largeur mais un tel choix augmenterait la quantité de matière qui devrait être enlevée pour retrouver la forme circulaire de l'élément.)

Après la découpe, la périphérie de l'anneau est usinée, à l'intérieur et à l'extérieur, afin de produire un élément circulaire dans son ensemble (voir la figure 2C). Pendant l'utilisation d'une pièce produite à partir d'un tel élément, un effort de cisaillement, E, dans une direction tangentielle n'est plus dans une direction favorisant le délaminage des couches dont la préforme de la pièce est composée (voir la figure 2D).

Selon cet aspect de l'invention, des préformes pour la fabrication des pièces annulaires peuvent être réalisées par un procédé impliquant des pertes mineures de matériau et ces préformes permettent d'obtenir des pièces annulaires ayant une tendance réduite au délaminage pendant l'usage.

Plus l'angle du plan découpe par rapport à une coupe droite du manchon s'approche à 45°, plus les pièces découpées dans le manchon résistent au délaminage sous les effets de cisaillement dans la direction tangentielle à celles-ci. Cependant, les chutes de matériau augmentent avec cet angle (appelé ci-après "l'angle de découpe"). Ainsi, l'angle de découpe doit être optimisé afin d'obtenir des pièces ayant de bonnes performances mécaniques tout en tenant compte des pertes de matière tolérées. De préférence, l'angle de découpe a une valeur comprise entre 10° et 45°. Quand l'on utilise un angle de découpe de 45° les chutes de matériau restent assez importantes, autour de 35%. Ainsi, il est plus avantageux d'employer un angle de découpe compris entre 10° et 30°.

Ce premier aspect de l'invention prévoit aussi un procédé de fabrication de pièces annulaires en matériau composite, comportant le procédé de fabrication d'une préforme décrit ci-dessus et des étapes de densification de la préforme, de découpe et d'usinage. Un usinage supplémentaire de la pièce peut être nécessaire afin d'adapter la pièce à une utilisation spécifique, par exemple, une utilisation comme disque de frein.

Les préformes de disques de frein sont fabriquées avantageusement par aiguilletage de textures bidimensionnelles formées à partir de fils ou câbles de polyacrylonitryle (P.A.N.) préoxydé ou de fils méchés en carbone (demande de brevet FR-A-2 669 940) ou de fils hybrides (demande de brevet français déposée sous le numéro 95 06 200). Dans l'art antérieur, les textures bidimensionnelles, par exemple des tissus ou nappes de câbles ou de fils, sont aiguilletées les unes sur les autres pour former une plaque dans laquelle sont découpées les préformes annulaires des disques de frein.

Pour des matériaux destinés à être exposés à des contraintes thermomécaniques sévères, comme c'est souvent le cas pour les disques de freins, il est important de maintenir les propriétés constantes dans toute la masse afin, notamment, d'éviter des hétérogénéités des propriétés mécaniques et tribologiques. Ainsi, il est important de maintenir uniforme la densité d'aiguilletage dans un manchon destiné à servir de préforme, ou de source de préformes, de disques de freins. Pourtant, si un tel manchon est fabriqué par bobinage autour d'un mandrin elliptique l'aiguilletage soulève des difficultés.

Dans le procédé connu de FR-A-2 584 107, où une bande fibreuse est enroulée autour d'un mandrin cylindrique, chaque couche bobinée est aiguilletée par une planche à aiguilles dès qu'elle est déposée sur le mandrin. Le mandrin est entraîné en rotation autour de son axe, la position de cet axe étant fixe, et la planche à aiguilles qui s'étend parallèlement à une génératrice du mandrin est animée d'un mouvement alternatif dans une direction perpendiculaire à l'axe du mandrin. L'amplitude du déplacement de la planche à aiguilles est constante. Pour assurer une profondeur uniforme d'aiguilletage des couches bobinées pendant tout le processus, on augmente la distance moyenne entre la planche à aiguilles et l'axe du mandrin à la mesure de l'augmentation de l'épaisseur des couches cumulées.

Un tel procédé n'est pas directement utilisable avec un mandrin elliptique.

Selon un autre de ses aspects, l'invention vise des procédés et des appareils pour la production des préformes pour la fabrication des pièces annulaires, dans lesquels une bande de matière fibreuse est bobinée sur un mandrin elliptique, et les couches superposées sont aiguilletées d'une manière uniforme.

Ce but est atteint grâce à un procédé et un appareil selon lesquels, conformément à l'invention, une bande de matériau fibreux est bobinée autour d'un mandrin elliptique et les couches bobinées sont aiguilletées au moyen d'une planche à aiguilles tandis qu'un déplacement est commandé entre le mandrin et la position moyenne de la planche à aiguilles, afin de compenser l'excentricité de la section du mandrin. De préférence, le déplacement entre la planche à aiguilles et le mandrin est tel que la planche à aiguilles entre en contact avec les couches à aiguilleter dans un plan (le plan d'aiguilletage) fixe par rapport à la position moyenne de la planche à aiguilles.

La commande de la planche à aiguilles est simplifiée si la fréquence d'aiguilletage reste constante, ce qui implique une nécessité de garder constante la vitesse relative entre la planche à aiguilles et la surface à aiguilleter pour parvenir à une densité surfacique d'aiguilletage constante. Aussi, il est nécessaire qu'au moment du contact, la surface d'aiguilletage de la planche à aiguilles soit dans un plan tangentiel à la surface à aiguilleter opposée afin d'obtenir une densité surfacique d'aiguilletage constante. La mise en oeuvre du déplacement des éléments en vue de remplir ces conditions est facilitée si l'on garde constante la vitesse de déplacement de la planche à aiguilles et l'on varie la vitesse de rotation du mandrin et/ou la vitesse de déplacement de l'axe de celui-ci.

Dans la description qui suit, on décrira des déplacements de la planche à aiguilles et/ou de l'axe du mandrin. On comprendra que chaque déplacement de la planche à aiguilles peut être remplacé par un déplacement approprié du mandrin ou par une combinaison de déplacements de la planche à aiguilles et du mandrin, et vice versa. L'important est de produire un mouvement relatif entre la planche à aiguilles et la surface à aiguilleter qui résulte en un aiguilletage uniforme des couches bobinées.

Toutefois, comme bien connu dans la fabrication des préformes aiguilletées, on évite que les aiguilles de la planche frappent exactement dans le même emplacement à chaque tour du mandrin puisque une telle méthode entraînera la présence de zones d'affaiblissement dans le manchon produit. Le petit décalage nécessaire pour éviter ceci peut être produit en déplaçant la planche à aiguilles (ou le mandrin) dans la direction longitudinale du mandrin (c'est-à-dire, dans la direction parallèle à l'axe de rotation du mandrin).

Selon cet aspect de l'invention, dans un premier mode de réalisation, un mandrin elliptique est entraîné en rotation autour de son axe afin d'enrouler sur sa périphérie une bande de matériau fibreux et, en même temps, l'axe du mandrin s'approche et s'écarte d'un plan d'aiguilletage d'une façon cyclique sur un trajet perpendiculaire au plan d'aiguilletage. La surface courbe de la couche extérieure bobinée sur le mandrin affleure le plan d'aiguilletage, la région de contact étant une ligne. Le déplacement de l'axe du mandrin est réglé afin de garder la surface courbe dans une position telle que le plan d'aiguilletage est tangentiel à celle-ci au niveau de la ligne de contact. Cela implique que la partie de la surface courbe qui affleure le plan d'aiguilletage glisse dans ce plan avec un mouvement de va et vient. La planche à aiguilles opposée à la surface courbe du mandrin s'approche et s'écarte du plan d'aiguilletage afin de frapper et percer les couches extérieures bobinées sur le mandrin. La planche à aiguilles se déplace aussi avec un mouvement de va et vient dans le plan d'aiguilletage afin de suivre le mouvement de la ligne de contact de la surface des couches bobinées avec le plan d'aiguilletage. Au moment du contact, la surface d'aiguilletage de la planche à aiguilles est orientée dans la direction tangentielle à la surface à aiguilleter opposée.

Ce premier mode de réalisation peut également être mis en oeuvre tout en gardant fixe l'emplacement de l'axe de rotation du mandrin. Le mouvement relatif nécessaire entre la planche à aiguilles et le mandrin sera produit par le seul déplacement de la planche à aiguilles.

Dans un deuxième mode de réalisation, le mandrin elliptique est toujours entraîné en rotation autour de son axe et, en même temps, l'axe du mandrin s'approche et s'écarte d'un plan d'aiguilletage d'une façon cyclique sur un trajet perpendiculaire au plan d'aiguilletage. Dans ce deuxième mode de réalisation, la région où la surface courbe de la couche bobinée extérieure affleure le plan d'aiguilletage ne se déplace pas dans ce plan; mais l'orientation de la surface courbe par rapport au plan d'aiguilletage change de façon cyclique tandis que le mandrin tourne. Ainsi, la planche à aiguilles n'a pas besoin de se déplacer dans le plan d'aiguilletage. Il suffit que l'orientation de la surface d'aiguilletage de la planche à aiguilles oscille, d'une façon cyclique, afin de se trouver dans un plan tangentiel à la surface extérieure des couches bobinées au moment du contact entre la planche à aiguilles et les couches à aiguilleter.

Dans un troisième mode de réalisation, le mandrin elliptique est entraîné en rotation autour de son axe et, en même temps, l'axe du mandrin se déplace pour suivre un chemin formé de deux demi-ellipses. Ce déplacement est tel qu'à tout moment il y a une partie de la surface courbe de la couche bobinée extérieure qui se trouve à un emplacement fixe dans le plan d'aiguilletage, ce dernier étant tangentiel à cette partie de la surface courbe. La planche à aiguilles frappe en cet emplacement fixe dans le plan d'aiguilletage et l'orientation de la surface d'aiguilletage peut rester fixe.

Le premier de ces trois modes de réalisation est préféré à cause de la simplicité relative de sa mise en oeuvre.

Selon cet aspect de l'invention, des préformes pour la fabrication des pièces annulaires peuvent être produites par enroulement d'une bande de matériau fibreux sur un mandrin elliptique, avec un aiguilletage simultané et uniforme des couches bobinées, pour produire un manchon elliptique destiner à être découper en biais.

Ce deuxième aspect de l'invention prévoit, aussi, un procédé de fabrication de pièces annulaires en matériau composite, comportant le procédé de fabrication d'une préforme décrit ci-dessus et des étapes de densification de la préforme, de découpe et d'usinage.

L'étape de densification prévu dans le procédé de fabrication des pièces annulaires selon les premier et deuxième aspects de l'invention peut être accomplie par l'une quelconque des méthodes connus. Le densification peut commencer avant ou après que le manchon a été retiré du mandrin. Aussi, le manchon peut être découpé en pièces annulaires avant le densification ou après l'une ou plusieurs des étapes de densification. Il est préférable d'accomplir au moins la première étape de densification avant la découpe du manchon parce que la tenue du matériau alors consolidé est meilleure après cette première densification.

Une des méthodes de densification connues est la méthode classique d'infiltration chimique en phase vapeur isotherme isobare. L'élément à densifier est placé dans une enceinte dans laquelle on introduit un gaz qui, dans des conditions prédéterminées de température et de pression donne la matériau constitutif de la matrice par décomposition ou réaction entre ses constituants. Dans la méthode classique, l'enceinte comprend un induit, généralement en graphite, qui délimite la chambre d'infiltration et est couplé avec un inducteur entourant l'enceinte. Lorsque cette méthode est appliqué à la fabrication de pièces annulaires à partir d'un manchon, le manchon est généralement découpé avant la densification, pour que le gaz puisse plus facilement infiltrer la porosité interne des pièces de façon uniforme. Cela implique toutefois des interruptions répétées de la densification afin de pouvoir écroûter les faces des pièces afin de rouvrir complètement la porosité et laisser pénétrer de nouveau le gaz.

Avec des manchons elliptiques, il est possible de réaliser la densification au moins partielle du manchon par un procédé d'infiltration chimique en phase vapeur du type à gradient de température, avant découpe du manchon. Selon ce procédé, le chauffage du manchon peut être réalisé par couplage inductif entre l'inducteur et un induit constitué par un noyau central autour duquel le manchon est disposé. Ainsi, un gradient de température s'établit entre la surface interne la plus chaude du manchon, au contact de l'induit, et la surface externe. La densification est alors favorisée dans les parties du manchon les plus éloignées de ses surfaces externes et le risque d'obturation prématurée de la porosité superficielle par des dépôts parasites est amoindri, ce qui élimine la nécessité de procéder à des écroûtages. On notera que le chauffage du manchon peut aussi être réalisé par couplage inductif direct entre l'inducteur et le manchon lorsque la nature de celui-ci le permet (par exemple, lorsque le manchon est en carbone). Un procédé de densification par infiltration chimique en phase vapeur avec gradient de température est décrit par exemple dans la demande de brevet FR-A-2 711 647.

Pour réduire encore plus les pertes de matière dans la fabrication des pièces annulaires selon ces premiers et deuxième aspects de l'invention il est possible de fabriquer un manchon de section elliptique ayant aux deux bouts des faces planes inclinées par rapport à une coupe droite du manchon, c'est-à-dire, des faces parallèles au plan de découpe prévu pour le manchon.

D'autres particularités et avantages de la présente invention ressortiront à la lecture de la description faite ci-après à titre indicatif, et non limitatif, en référence aux dessins annexés sur lesquels:

- la figure 1 (figures 1A à 1D) illustre un procédé connu de fabrication de préformes annulaires pour des pièces annulaires en matériau composite, ce procédé utilisant un mandrin cylindrique;
- la figure 2 (figures 2A à 2D) illustre un procédé selon la présente invention de fabrication de préformes pour la fabrication des pièces annulaires en matériau composite, ce procédé utilisant un mandrin elliptique;
- la figure 3 est un organigramme montrant les étapes typiques dans la production d'une pièce annulaire selon les procédés de l'invention;
- la figure 4 (figures 4A à 4C) illustre l'étape de découpe d'un manchon elliptique selon l'invention afin d'obtenir un élément annulaire;
- la figure 5 (figures 5A à 5C) illustre un exemple de la découpe d'un manchon elliptique selon l'invention afin d'obtenir un élément annulaire aux dimensions prédéterminées;
- la figure 6 indique les dispositions du mandrin elliptique et de la planche à aiguilles dans un premier procédé de bobinage d'une bande sur un mandrin elliptique selon l'invention;
- la figure 7 est un schéma illustrant le déplacement du mandrin elliptique dans le premier procédé de bobinage;
- la figure 8 est un schéma illustrant un deuxième procédé de bobinage d'une bande sur un mandrin elliptique;
- la figure 9 indique les dispositions du mandrin elliptique et de la planche à aiguilles dans un troisième procédé de bobinage d'une bande sur un mandrin elliptique selon l'invention;
- la figure 10 est un schéma illustrant le déplacement du mandrin elliptique dans le troisième procédé de bobinage; et
- la figure 11 est une vue de côté d'un exemple d'appareil susceptible de mettre en oeuvre le premier mode de réalisation d'un procédé de bobinage et d'aiguilletage selon l'invention.

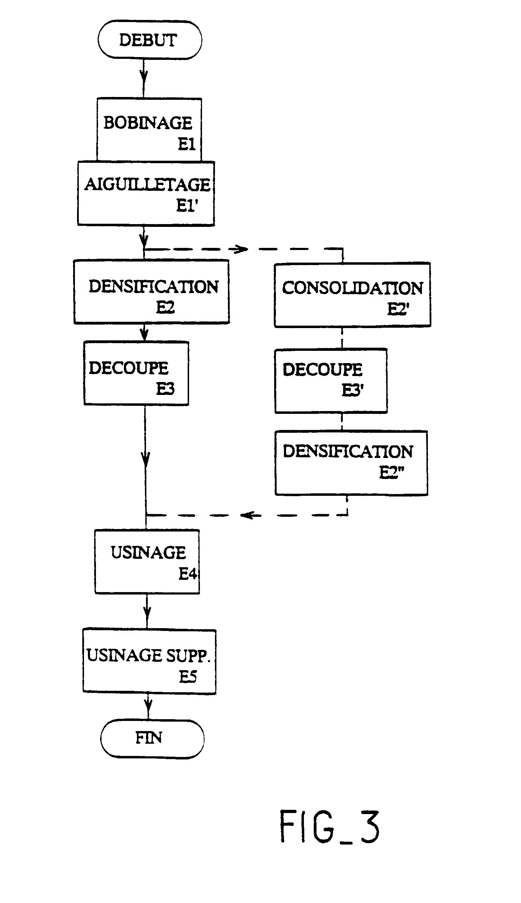

La fabrication d'une préforme pour la fabrication d'une pièce annulaire en matériau composite selon les procédés de la présente invention et la production de la pièce elle-même comporte plusieurs étapes, comme montré sur la figure 3.

Une première étape E1 consiste dans le bobinage d'une bande de matériau fibreux autour d'un mandrin elliptique. La bande de matériau fibreux peut consister en un quelconque des matériaux connus pour la fabrication de pièces en matériau composite, ou en un mélange de tels matériaux. Les fibres se présentent sous une forme appropriée (des nappes, des bandes, des tissus, etc. de câbles, de fils continus, de fils méchés, etc.). La matière constitutive des fibres dépend de l'application envisagée. Pour des disques de frein, on utilisera de préférence des fibres de carbone, mais d'autres matières pourraient convenir, notamment des céramiques.

Les couches bobinées sont aiguilletées en même temps qu'elles sont déposées sur le mandrin (étape E1'). Comme décrit plus tard, plusieurs méthodes sont possibles pour assurer que la densité d'aiguilletage est uniforme. Quand l'ensemble des couches bobinées sur le mandrin a atteint une épaisseur voulue, le bobinage est arrêté.

De préférence, le manchon elliptique ainsi produit est ensuite densifié pour combler la porosité interne de celui-ci (étape E2), par exemple par infiltration chimique en phase vapeur, et découpé en biais afin d'obtenir des anneaux (étape E3). Le manchon elliptique constitue alors la préforme à densifier.

Il est aussi possible de découper le manchon avant le commencement de la densification; en ce cas les anneaux fibreux découpés constituent les préformes à densifier. Une telle démarche n'est possible que dans la mesure où le manchon elliptique a une tenue suffisante pour que le mandrin puisse être retiré. Le plus souvent un aiguilletage des couches bobinées est suffisant pour produire un manchon ayant la tenue requise. Il est aussi possible que le manchon soit produit à partir des couches de matériau fibreux imprégnées de résine, le manchon étant traité, avant le retrait du mandrin, afin de rendre solidaire les couches enroulées par polymérisation de la résine.

Si le manchon elliptique n'a pas suffisamment de tenue pour que le mandrin puisse être retiré à la fin du bobinage, l'étape de densification peut être commencée et continuée jusqu'au moment où le manchon est suffisamment consolidé (étape E2'). A ce moment-là, le mandrin peut être retiré et le manchon est découpé en anneaux (étape E3'). Les éléments pré-densifiés ainsi produits pourraient après usinage être retournés à l'installation de densification pour terminer la densification (étape E2").

Si l'on utilisait la méthode d'infiltration chimique en phase vapeur isothermique classique déjà décrite, l'homogénéité de la matrice dans les pièces densifiées serait meilleure si le mandrin était retiré et les préformes découpées avant la densification ou au plus tard pendant le processus de densification. Par contre, on peut très bien laisser le manchon non-découpé jusqu'à la fin de la densification si l'on utilise le procédé à gradient de température mentionné ci-dessus, et l'on obtient une densification uniforme de la préforme et des pertes de matière réduites du fait qu'il n'y a pas d'écroûtages.

Les anneaux découpés dans le manchon elliptique ne sont pas d'une circularité parfaite. Aussi, il est nécessaire d'usiner les anneaux afin de leur conférer une forme exactement annulaire (étape E4).

Une ou plusieurs étapes supplémentaires sont nécessaires pour la fabrication d'une pièce annulaire, telle qu'un disque de frein, à partir de l'élément annulaire décrit ci-dessus. Par exemple, la pièce doit subir un dernier usinage afin d'être adaptée à l'usage auquel elle est destinée (étape E5). Dans le cas des pièces destinées à servir de disques de freins, cet usinage final sert à former des encoches dans la périphérie interne ou externe des pièces.

Une ou plusieurs des étapes mentionnées ci-dessus peuvent être mises en oeuvre en utilisant un ou plusieurs robots. L'utilisation des moyens robotiques est envisagée, en particulier, dans l'étape de fabrication du manchon elliptique au cas de bobinage et aiguilletage simultanés. On notera en outre que le mandrin peut être muni d'un revêtement de protection, tel qu'un feutre, dans lequel les aiguilles peuvent pénétrer sans être endommagées lors de l'aiguilletage des premières couches, comme décrit dans le document FR-A-2 584 107 déjà cité.

Avant de décrire un appareil susceptible de mettre en oeuvre les procédés de l'invention, on décrira avec plus de détails l'étape de découpe du manchon elliptique et les étapes de bobinage et d'aiguilletage simultanés.

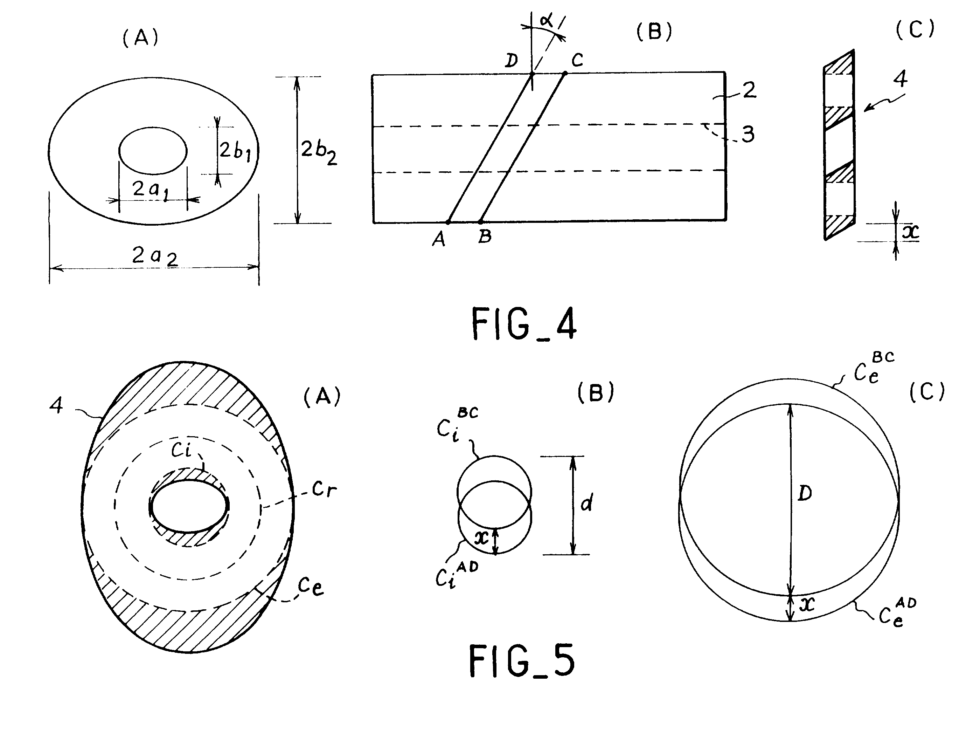

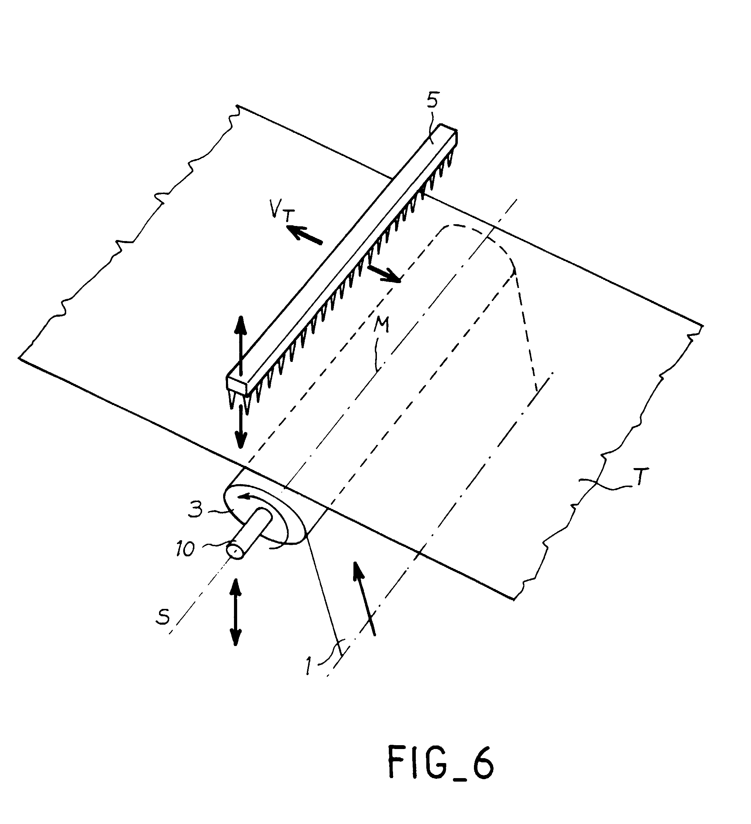

L'étape de découpe du manchon est expliquée ci-dessous en référence aux figures 4 et 5.

Les figures 4A et 4B illustrent un manchon elliptique 2 ayant un trou central 3 (correspondant au mandrin elliptique utilisé dans le bobinage). La figure 4A montre une vue en bout et la figure 4B montre une vue de côté. Dans cet exemple, le plan de découpe fait un angle de 30° par rapport à une coupe droite du manchon. Les lignes AD et BC indiquent deux plans de découpe délimitant un anneau 4.

La découpe du manchon elliptique 2 utilise le fait que la projection d'une ellipse dans un plan passant par le grand axe de celle-ci, et faisant un angle $\alpha$ par rapport au plan de l'ellipse, est un cercle de diamètre égal au grand axe de l'ellipse. La relation entre l'angle $\alpha$ et les dimensions de l'ellipse est donnée par la formule:

$$\cos\alpha = b/a$$

où

2a = le grand axe de l'ellipse, et
2b = le petit axe de l'ellipse

Quand on bobine des couches de matériau sur un mandrin elliptique, le rapport b/a de l'ellipse définie par la couche extérieure diffère de celui de l'ellipse définie par le mandrin (voir la figure 4A). Ainsi, dans un plan de découpe incliné par rapport à un plan normal à l'axe du mandrin, on peut certes obtenir une forme circulaire au niveau de la périphérie intérieure du manchon mais alors on obtient une forme elliptique au niveau de la périphérie extérieure du manchon. Cest à dire que l'excentricité d'un anneau découpé dans le manchon elliptique n'est pas constante dans la largeur de l'anneau . De préférence, on choisit un angle de découpe a qui mène à une forme circulaire dans ce plan soit au niveau de la périphérie intérieure de l'anneau découpé (au niveau du mandrin), ou au niveau de la périphérie extérieure de l'anneau découpé (au niveau de l'extérieur du manchon), ou à une distance intermédiaire entre les périphéries intérieures et extérieures, et on usine la périphérie extérieure et/ou intérieure de l'anneau pour retrouver la forme circulaire.

En outre, bien que les faces de chaque anneau correspondant aux plans de découpe soient parallèles, il y a un décalage x entre elles. Il en résulte que les surfaces courbes des périphéries de l'anneau (intérieure et extérieure) ne sont pas perpendiculaires aux faces correspondant aux plans de découpe (voir la figure 4C). Cest une raison supplémentaire de la nécessité d'usiner l'anneau découpé afin de lui donner une forme exactement annulaire.

La figure 4C montre un anneau 4 découpé en utilisant un plan de découpe qui mène à une forme circulaire dans ce plan à mi-distance entre les périphéries intérieure et extérieure de l'anneau, c'est à dire à mi-largeur de l'anneau. Les parties hachurées sur la figure correspondent aux parties de l'anneau devant être enlevées afin de produire un élément ayant une forme proprement annulaire.

Comme expliqué ci-dessus, dans le cas d'une préforme annulaire destinée à fournir des pièces annulaires susceptibles d'être soumises à des efforts de cisaillement dans la direction tangentielle, le choix de l'angle de découpe se fait afin d'optimiser le rapport des chutes de matériau à la résistance à délaminage voulue dans les pièces annulaires. A cet égard un angle de découpe entre 10° et 45° est préféré, et un angle entre 10° et 30° s'avère très avantageux au niveau de la réduction des pertes de matière. Une fois cet angle de découpe choisi, on peut sélectionner l'excentricité du mandrin afin d'obtenir une forme circulaire dans le plan de découpe à une largeur voulue.

En choisissant les dimensions du mandrin elliptique, et l'épaisseur du manchon obtenu par le bobinage pour la fabrication de préformes aux dimensions intérieures et extérieures définies, il faut tenir compte de l'effet de l'usinage sur les dimensions intérieures et extérieures des anneaux découpés. Un exemple de découpe est montré par la figure 5.

La figure 5A montre la forme de l'anneau découpé 4 dans un quelconque des plans de découpe AD ou BC de la figure 4 (la forme est la même le long de l'épaisseur de l'anneau). Une partie à mi-largeur de l'anneau découpé est de forme circulaire (voir la cercle $c_r$ de la figure 5). Les périphéries extérieure et intérieure de l'anneau sont elliptiques de sorte qu'un usinage des périphéries de l'anneau est nécessaire pour retrouver une forme circulaire (suivant le cercle extérieur $c_e$ et le cercle intérieur $c_i$ de la figure).

Les figures 5B et 5C montrent des schémas indiquant le décalage entre les cercles intérieurs ($c_i^{AD}$, $c_i^{BC}$) et les cercles extérieurs ($c_e^{AD}$, $c_e^{BC}$) définis dans les plans AD et BC de la figure 4B; en effet ce décalage existe entre les faces avant et arrière de l'anneau 4. Les relations entre les dimensions du manchon elliptique et l'angle de découpe, d'une part, et les dimensions de l'élément annulaire obtenue après usinage de l'anneau 12 (enlèvement des parties hachurées de la figure 5A) se déduisent immédiatement de la figure 5. Si $2a_1$ et $2b_1$ sont les longueurs du grand et du petit axe de l'ellipse définie par la périphérie intérieure $2a_2$ et $2b_2$ sont les longueurs du grand et du petit axe de l'ellipse définie par la périphérie extérieure du manchon dans le plan normal à l'axe de celui-ci, $\alpha$ est l'angle de découpe par rapport au plan normal à l'axe du manchon, d et D les diamètres intérieur et extérieur de la préforme annulaire à obtenir, et e l'épaisseur de celle-ci, on a en effet:

$$d \geq 2a_1 + x$$

$$\geq 2a_1 + e \tan\alpha$$

et

$$D \leq 2a_2 - x$$

$$\leq 2a_2 - e \tan\alpha$$

Si les dimensions désirées de la préforme annulaires sont d = 250 mm, D = 450 mm et e = 25 mm, et l'angle de découpe est 30°, le mandrin elliptique doit avoir un grand axe $2a_1$ de 225 mm au plus et l'ellipse définie par l'extérieur du manchon doit avoir un grand axe $2a_2$ de 475 mm au moins. Aussi, compte tenu du fait que la relation cos a = b/a s'applique à mi-largeur du manchon, en utilisant les valeurs de $2a_1$ = 225 mm et $2a_2$ = 475 mm,

$$\cos 45° = \tfrac{1}{2}(b_1 + b_2) / \tfrac{1}{2}(a_1 + a_2)$$

$$0.707 = \tfrac{1}{2}(b_1 + b_2 / 175$$

$$b_1 + b_2 \cong 247{,}5$$

Puisque

$$2b_2 - 2b_1 = 2a_2 - 2a_1 = 2 x$$

l'épaisseur des couches bobinées (2 x f)
le petit axe $2b_1$ du mandrin est égal à 122,5 mm et le petit axe $2b_2$ de l'ellipse définie par l'extérieur du manchon est égal à 372,5 mm.

Une conséquence du procédé de découpe décrit ci-dessus est que les extrémités du manchon elliptique ne sont pas utilisées. Dans l'exemple de la figure 5, une trentaine de pièces peuvent être obtenues dans un manchon de longueur 1.5 m entraînant des chutes d'environ 350 mm aux extrémités du manchon. Evidemment, ces chutes sont moins importantes, en pourcentage, si le manchon utilisé est de longueur accrue.

La présente invention peut également être mise en oeuvre de telle façon à réduire encore plus les pertes de matière, en utilisant un manchon de section elliptique ayant aux deux bouts des faces planes inclinées par rapport à une coupe droite du manchon, c'est-à-dire, des faces parallèles au plan de découpe prévu pour le manchon. Ainsi l'on peut découper des pièces dans toute la longueur du manchon et ne pas laisser aux bouts de matériau inutilisé. Un manchon ayant une telle forme peut être réalisé par déplacement du mandrin dans la direction de son axe avec un mouvement de va et vient pendant le bobinage. Un tel manchon peut également être obtenu par déplacement, dans la direction longitudinale du mandrin avec un mouvement de va et vient pendant le bobinage, du rouleau fournissant le matériau fibreux à bobiner. Tant que l'on utilise un angle de découpe du manchon assez faible ce procédé ne produit pas trop de perturbations au niveau de déformation de la nappe ou de l'angle des fibres par rapport aux surfaces frottantes des pièces découpées dans le manchon.

On décrira, maintenant l'étape de bobinage. Celle-ci doit être adaptée, dans le cas où un aiguilletage est mis en oeuvre simultanément, pour assurer l'uniformité de la densité d'aiguilletage. Cette adaptation implique un déplacement relatif cyclique entre la planche à aiguilles et le mandrin afin de compenser l'excentricité de section de ce dernier.

La figure 6 illustre un premier mode de réalisation d'un procédé de bobinage avec aiguilletage simultané des couches bobinées. Dans ce mode de réalisation, un mandrin elliptique 10 est entraîné en rotation autour de son axe S afin d'enrouler sur sa périphérie une bande de matériau fibreux 1. En même temps, l'axe du mandrin S s'approche et s'écarte d'un plan d'aiguilletage T d'une façon cyclique sur un trajet rectiligne Δ perpendiculaire au plan T. La surface courbe de la couche extérieure bobinée sur le mandrin affleure le plan d'aiguilletage T, la région de contact étant une ligne M. Une planche à aiguilles 5 opposée à la surface extérieure des couches bobinées est animée d'un mouvement alternatif perpendiculairement au plan d'aiguilletage T afin de frapper et d'aiguilleter les couches extérieures bobinées sur le mandrin.

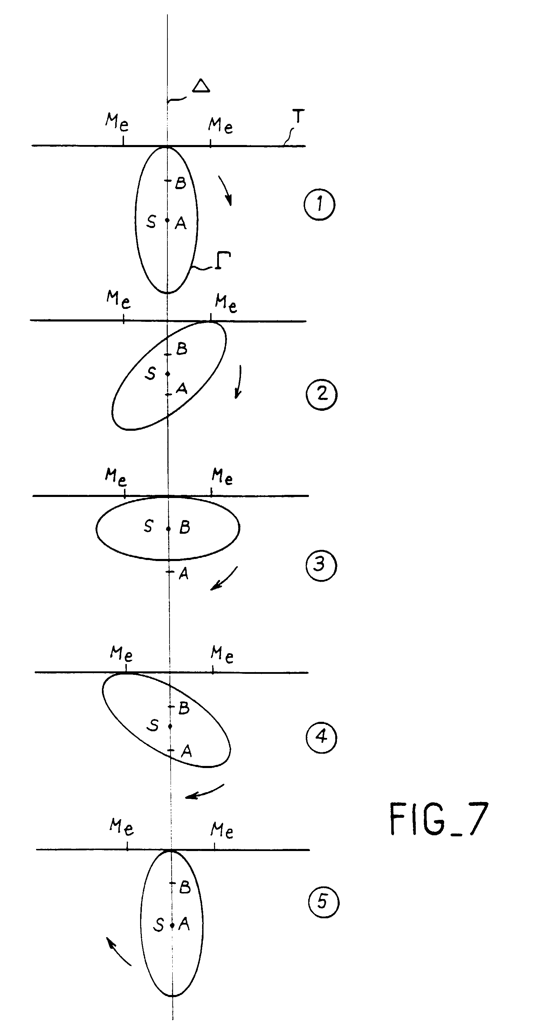

Le déplacement du mandrin lorsqu'il fait un demi-tour autour de son axe dans ce mode de réalisation est illustré sur la figure 7. L'ellipse Γ de la figure représente les couches extérieures bobinées sur le mandrin 10. Les limites du déplacement de l'axe S du mandrin sur la ligne Δ sont des positions A et B, l'axe S étant à la limite A quand le grand axe de l'ellipse Γ est perpendiculaire au plan d'aiguilletage T (les positions 1 et 5 de la figure 7) et l'axe S étant à la limite B quand le petit axe de l'ellipse Γ est perpendiculaire au plan d'aiguilletage T (la position 3 de la figure 7). Par suite du déplacement de l'axe du mandrin, la ligne de contact M entre la surface courbe de la couche extérieure bobinée sur le mandrin et le plan d'aiguilletage T se déplace dans ce plan avec un mouvement de va et vient entre deux limites $M_e$ (les positions 2 et 4 sur la figure 7).

La planche à aiguilles 5 se déplace aussi avec un mouvement de va et vient afin de suivre le mouvement dans le plan d'aiguilletage T de la ligne de contact M.

De façon à respecter une densité surfacique d'aiguilletage constante, si la fréquence de frappe de la planche à aiguilles est constante, il est nécessaire que la vitesse relative tangentielle entre la planche à aiguilles et la couche extérieure bobinée sur le mandrin soit constante. La vitesse de translation ($v_T$) de la ligne de contact M dans le plan d'aiguilletage T peut être rendue constante par une synchronisation de la vitesse de déplacement de l'axe du mandrin entre les positions A et B et de la vitesse de rotation du mandrin autour de son axe de rotation.

Pour une ellipse Γ avec un grand axe $2a_2$ et un petit axe $2b_2$, la distance entre les extrêmes Me est $2(a_2 - b_2)$. Si l'ellipse est la section droite d'un cylindre d'axe CC' (C étant la centre de l'ellipse Γ), il est préférable de déplacer l'axe CC' selon le mouvement de translation décrit ci-dessus. Dans un tel cas, si la rotation du mandrin se fait avec une vitesse ω(t), telle que la vitesse $v_T$ est constante, on peut bobiner sur le mandrin une nappe multiaxiale ou un tissu avec une vitesse tangentielle constante.

L'invention prévoit une variante de ce premier mode de réalisation d'un procédé de bobinage avec aiguilletage simultané des couches bobinées dans laquelle on garde fixe l'emplacement de l'axe de rotation du mandrin. Le mouvement relatif nécessaire entre la planche à aiguilles et le mandrin sera produit par le seul déplacement de la planche à aiguilles. Dans ce cas, l'aiguilletage n'aura plus lieu dans un seul plan mais dans un série de plans parallèles les uns aux autres. Afin d'obtenir une vitesse relative constante au moment du contact, il est préférable que la vitesse de déplacement de la planche à aiguilles soit gardée constante et que la vitesse de rotation du mandrin soit variée.

En outre, à chaque rotation du mandrin, celui doit s'éloigner de la position moyenne de la planche à aiguilles de façon qu'à mesure de l'augmentation de l'épaisseur de la préforme en cours d'aiguilletage, la constance de la profondeur de l'aiguilletage soit respectée puisque la course d'aiguilletage reste constante et égale, par exemple à l'épaisseur de quelques couches. Il est bien évident que cet éloignement peut se faire en déplaçant le mandrin et/ou la planche à aiguilles. Après bobinage de la dernière couche, plusieurs passes d'aiguilletage de finition pourront être réalisées afin de conserver une densité d'aiguilletage constante dans les couches situées au voisinage de la périphérie extérieure, comme décrit dans le document FR-A-2 584 107 déjà cité.

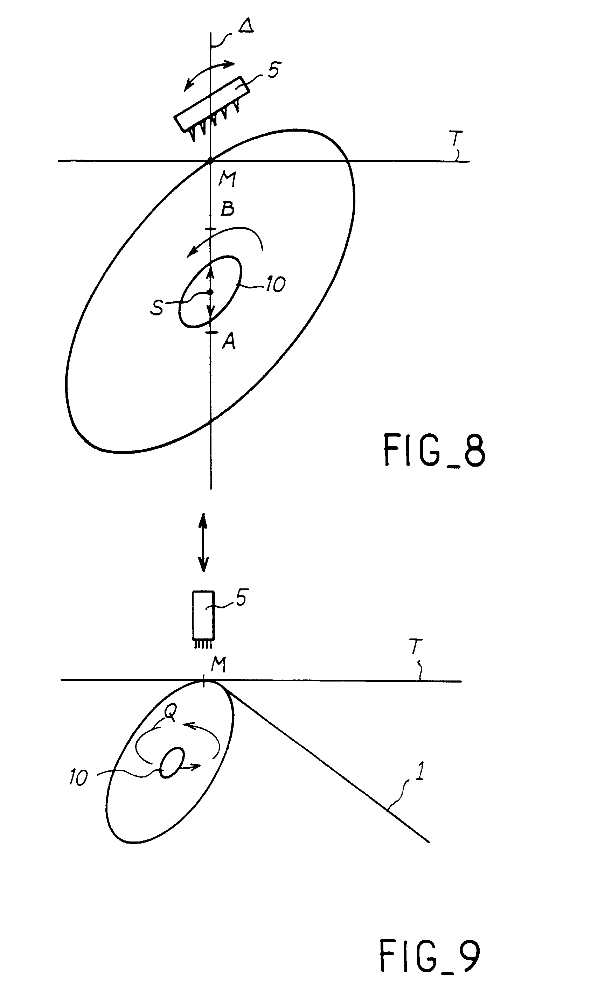

La figure 8 illustre une deuxième mode de réalisation où un mandrin elliptique 10 est toujours entraîné en rotation autour de son axe S tandis que l'axe du mandrin s'approche et s'écarte du plan d'aiguilletage T d'une façon cyclique entre deux extrêmes A, B sur un trajet rectiligne Δ. Cette fois-ci, le mouvement de l'axe du mandrin est tel que la surface courbe des couches extérieures bobinées sur le mandrin est tangente au plan d'aiguilletage T ou le coupe suivant une ligne fixe M. La planche à aiguilles 5 entre en contact avec les couches à aiguilleter dans une région comprenant cette ligne M. Ainsi, la planche à aiguilles 5 n'a pas besoin de se déplacer dans le plan d'aiguilletage. Mais, la planche à aiguilles a une tête orientable qui oscille d'une façon cyclique, afin d'adapter son orientation à la direction normale à la surface courbe des couches à aiguilleter au niveau de la ligne M. L'orientation φ de la surface d'aiguilletage de la planche à aiguilles par rapport au plan T varie entre deux extrêmes $\varphi_e$, où:

$$\varphi_e = arc\ tg\ [(a_2 - b_2)/\sqrt{(a_2 b_2)}]$$

$2a_2$ = grand axe de l'ellipse définie par la couche extérieure bobinée.
$2b_2$ = petit axe de l'ellipse définie par la couche extérieure bobinée.

Ce deuxième mode de réalisation permet d'obtenir une densité surfacique d'aiguilletage constante par le moyen d'un contrôle convenable de la vitesse de rotation du mandrin, de la vitesse de déplacement de l'axe du mandrin dans la direction Δ et de la vitesse d'oscillation de l'orientation de la planche à aiguilles.

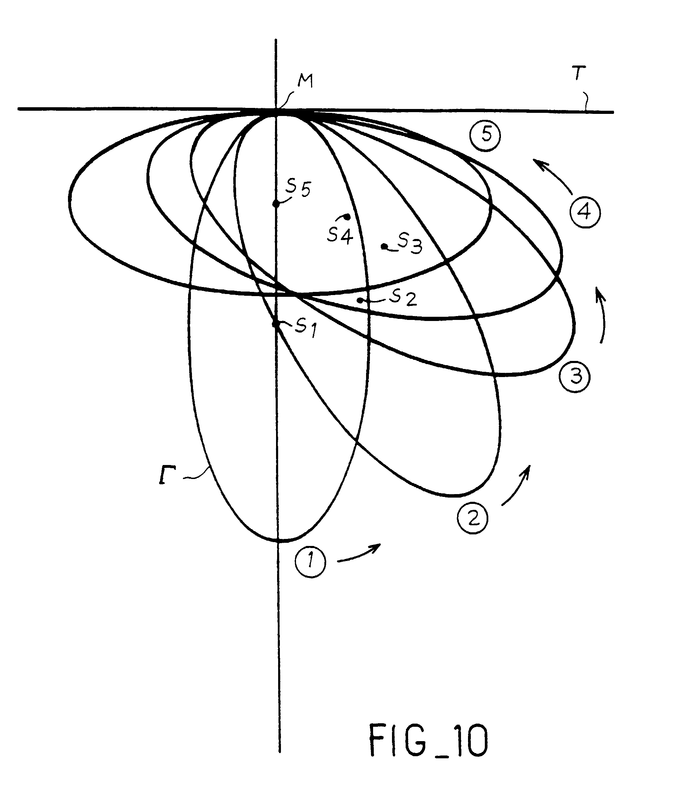

Les figures 9 et 10 illustrent un troisième mode de réalisation, où le mandrin elliptique est toujours entraîné en rotation autour de son axe et, en même temps, l'axe du mandrin se déplace pour suivre un chemin Q formé de deux demi-ellipses (voir la figure 9). En conséquence du mouvement du mandrin, la surface courbe extérieure des couches bobinées reste tangente au plan d'aiguilletage le long de la ligne fixe M. Cela permet à la planche à aiguilles de frapper sur une région fixe dans le plan d'aiguilletage et de garder une orientation fixe par rapport à ce plan. Cette solution est plus complexe à réaliser mécaniquement que les deux solutions précédentes (voir la figure 10 qui montre le déplacement de l'ellipse définie par la couche extérieure bobinée tandis que le mandrin fait un demi-tour autour de son axe). Néanmoins, la mise en oeuvre est facilitée si des moyens robotiques sont utilisés pour commander le déplacement du mandrin.

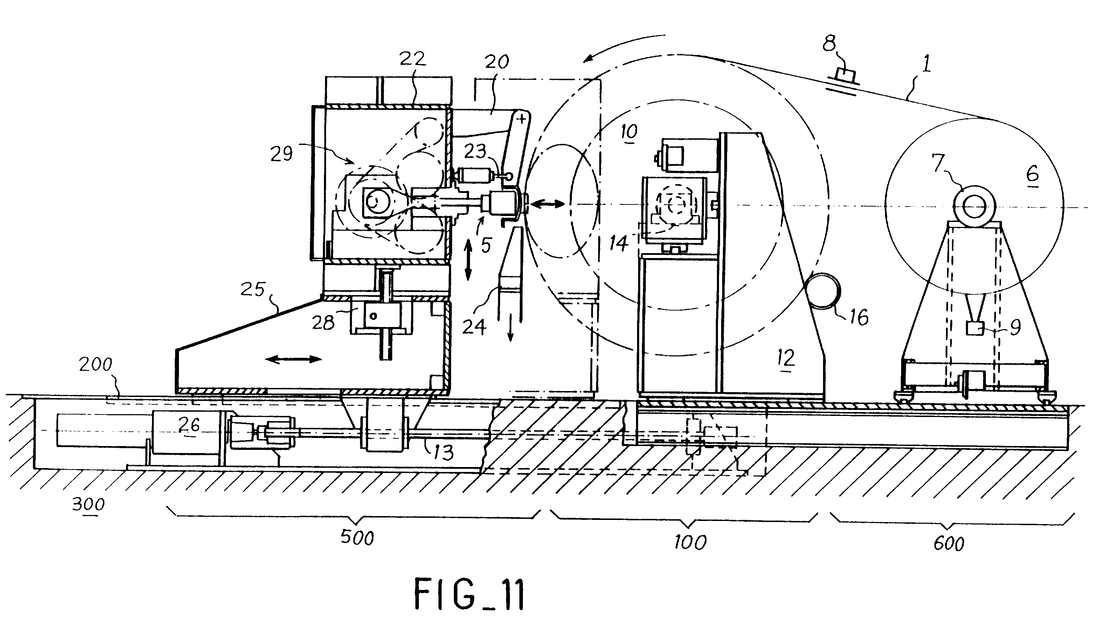

La figure 11 montre un appareil destiné à mettre en oeuvre le procédé de bobinage et d'aiguilletage selon le premier mode de réalisation décrit ci-dessus, dans la variante où l'axe du mandrin ne se déplace pas mais la planche à aiguilles est déplacée afin de suivre un chemin elliptique. En ce cas, le contact entre la planche à aiguilles et les couches extérieures bobinées a lieu dans des multiples plans parallèles les uns les autres et la planche à aiguilles est tangentielle à la surface à aiguilleter au moment du contact.

L'appareil de la figure 11 comporte un ensemble mandrin 100, un ensemble d'aiguilletage 500 et un ensemble dérouleur 600 tous posés sur un plateau usiné 200 inséré dans un plancher 300.

L'ensemble dérouleur 600 comporte une bobine 6 d'une bande de matériau fibreux 1 bobinée sur un noyau central. Un motoréducteur 7 commande la rotation du noyau central de la bobine 6 pour dérouler la bande 1 et la fournir à l'ensemble mandrin 100. Au commencement du déroulement, la bande 1 est entraînée autour du mandrin de façon manuelle jusqu'à ce qu'un tour complet ait été fait et l'extrémité libre de la bande est devenue coincée sous le commencement de la deuxième couche. Une cellule guide lisière 8 assure le bon positionnement de la bande par rapport à l'ensemble mandrin pendant le bobinage postérieur. Une cellule 9 de mesure de diamètre de la bobine 6 est agencé sous la bobine afin de mesurer comment évolue le diamètre de la bobine pendant le bobinage. La cellule de mesure de diamètre 9 détecte le diamètre de la bobine 6 de façon continue ou périodique, par exemple, en utilisant des moyens optiques. Le signal produit par la cellule de mesure de diamètre 9 permet de commander une augmentation de la distance entre l'ensemble mandrin 100 et l'ensemble d'aiguilletage 500 au fur et à mesure qu'augmente l'épaisseur des couches bobinées sur le mandrin.

Dans l'ensemble mandrin 100, un mandrin elliptique 10 à faible excentricité est monté sur un arbre central porté par un bâti 12. Le bâti 12 est monté sur le plateau 200 et est guidé, par un guide central 13 s'étendant sous le plateau 200, de telle façon qu'il peut être déplacé pour s'éloigner de l'ensemble d'aiguilletage 500 selon le signal produit par la cellule de mesure de diamètre 9 de l'ensemble dérouleur 600. Un motoréducteur 14 commande la rotation de l'arbre central et ainsi du mandrin 10. Dans ce mode de réalisation, le motoréducteur 14 est destiné à varier la vitesse de rotation du mandrin 10 afin de garder constante la vitesse tangentielle relative entre la surface à aiguilleter et la planche à aiguilles.

L'agencement de l'arbre central sur le bâti est tel que l'arbre central, et ainsi le mandrin, peut se déplacer dans la direction longitudinale, c'est-à-dire, dans la direction de l'axe du mandrin 10, un tel déplacement de nature cyclique étant utilisé pour décaler légèrement la position de frappe de la planche à aiguilles afin d'empêcher que l'aiguilletage ait lieu toujours dans les mêmes plans radiaux. Un rouleau presseur 16 est appliqué contre la couche extérieure bobinée sur le mandrin 10 afin de maintenir les couches bobinées. Dans la figure 11 une flèche A indique le chemin parcouru par le rouleau presseur 16 pendant le bobinage.

L'ensemble d'aiguilletage 500 comporte une planche à aiguilles 5 s'étendant sur la largeur de la bande de matériau fibreux 1 à aiguilleter et guidée à une première extrémité d'un bras extensible 20. Le bras extensible est monté à son autre extrémité sur un carter 22. Le bras 20 forme pied de biche à sa première extrémité qui est plaquée sur la surface du manchon en cours d'aiguilletage au moyen d'un vérin 23 s'appuyant sur le carter 22. La planche à aiguilles est amenée à frapper dans la direction transverse, c'est-à-dire, la direction horizontale dans la figure 11. Le mouvement alternatif de la frappe de la planche à aiguilles est produit par un dispositif d'entraînement à excentrique 29 logé dans le carter 22. Dans ce mode de réalisation, la fréquence de frappe de la planche à aiguilles 5 est gardée constante. L'ensemble d'aiguilletage 500 comporte aussi un dispositif aspirateur 24 agencé pour pouvoir aspirer de morceaux de fibres qui peuvent se détacher de la bande fibreuse pendant l'aiguilletage.

Le carter 22 repose sur un chariot 25 posée et guidée le long d'une tige 13 afin de pouvoir se déplacer pour s'éloigner et s'approcher de l'ensemble de mandrin 100 sous la commande d'un motoréducteur 26. Un autre motoréducteur 28 commande un déplacement vertical du boîtier 22. Les motoréducteurs 26 et 28 sont commandés afin de produire un déplacement elliptique périodique de la planche à aiguilles selon la variante du premier mode de réalisation du procédé de bobinage et d'aiguilletage décrit ci-dessus. Le motoréducteur 26 est en outre commandé de façon à maintenir la profondeur d'aiguilletage constante au fur et à mesure de l'épaississement du manchon.

Les procédés et dispositifs décrits précédemment permettent de fabriquer des préformes pour des pièces annulaires destinées à des utilisations diverses. Des pièces particulièrement visées sont les disques de freins. Les procédés de fabrication de préformes décrits ci-dessus ainsi que le choix des matières constitutives des fibres peuvent être adaptées à la nature des pièces visées. Dans le cas de préformes de disques de frein, le choix de l'orientation des fibres pendant le bobinage par rapport aux faces frottantes peut contribuer à l'optimisation des préformes.

Par exemple, si, dans les procédés de bobinage et aiguilletage décrits précédemment, on bobine des textures (tissus ou nappes) bidirectionnelles (0° et 90°) de façon qu'une direction soit parallèle à la direction d'avance de la nappe sous la tête à aiguilleter, et on découpe des anneaux avec un angle de découpe de 45°, on peut obtenir des disques de freins dans lesquelles les fibres sont inclinées par rapport aux faces frottantes d'un angle de 45°. Avec des disques de frein fabriqués à partir des préformes produites selon des tels procédés, les efforts de cisaillement pendant l'utilisation ne seront plus dans une direction interstrate.

Egalement, en bobinant des tissus ou des nappes multiaxiales de fils de carbone (2 ou 3 directions) avec deux directions des fils déterminées on peut choisir l'angle d'attaque des fibres par rapport aux faces frottantes du disque de frein visé. En outre, les fils d'une des directions peuvent être constitués de filaments de carbone continus, la liaison par aiguilletage étant assurée par des fils méchés, tels que ceux du document FR-A-2 669 940, placés dans l'autre direction (les aiguilles étant orientées convenablement).

**Revendications**

1. Un procédé de production de préformes pour la fabrication des pièces annulaires en matériau composite, caractérisé en ce qu'il comporte les étapes qui consistent à:

   fournir un mandrin (10) de section elliptique, et bobiner une bande (1) de matériau fibreux sur le mandrin (10) en couches superposées afin de produire une préforme sous forme de manchon elliptique (2), de sorte que les pièces annulaires (4) peuvent être obtenues après découpe suivant des plans non perpendiculaires à l'axe du manchon.

2. Procédé selon la revendication 1, caractérisé en ce que les couches superposées sont liées entre elles par aiguilletage.

3. Procédé selon la revendication 2, caractérisé en ce que chaque nouvelle couche est aiguilletée simultanément à son bobinage au moyen d'une planche à aiguilles (5) s'étendant sur la largeur de la bande (1).

4. Procédé selon la revendication 3, caractérisé en ce que pendant l'étape de bobinage et d'aiguilletage les mouvements de la planche à aiguilles (5) et du mandrin (10) sont tels qu'au moment de contact entre eux la surface d'aiguilletage de la planche à aiguilles se trouve dans un plan tangentiel à la partie opposée de la couche bobinée à aiguilleter.

5. Procédé selon la revendication 4, caractérisé en ce que pendant l'étape de bobinage et d'aiguilletage les mouvements du mandrin (10) et de la planche à aiguilles (5) sont tels qu'une partie de la couche bobinée extérieure reste à tout moment tangente à un plan d'aiguilletage (T) le long d'une ligne de contact (M).

6. Procédé selon la revendication 5, caractérisé en ce que pendant l'étape de bobinage et d'aiguilletage les mouvements du mandrin (10) et de la planche à aiguilles (5) sont tels que la position de la ligne de contact (M) dans le plan d'aiguilletage (T) se déplace avec un mouvement de va et vient.

7. Procédé selon la revendication 5, caractérisé en ce que pendant l'étape de bobinage et d'aiguilletage, la position de la ligne de contact (M) dans le plan d'aiguilletage (T) reste fixe, l'axe (S) du mandrin se déplaçant de façon cyclique sur un chemin (Q) comportant deux demi-ellipses.

8. Procédé selon la revendication 4, caractérisé en ce que pendant l'étape de bobinage et d'aiguilletage le mouvement du mandrin (10) est tel qu'une partie de la couche bobinée extérieure se trouve à tout moment dans une position d'aiguilletage (M) fixe et la surface d'aiguilletage de la planche à aiguilles (5) change d'orientation afin de rester tangentielle à la partie opposée de la couche à aiguilleter.

9. Procédé selon la revendication 6 ou 8, caractérisé en ce que, pendant l'étape de bobinage et d'aiguilletage, le mandrin (10) tourne autour de son axe et, en même temps, l'axe (S) du mandrin se déplace avec un mouvement de va et vient pour s'approcher et s'éloigner du plan ou de la position d'aiguilletage.

10. Procédé selon l'une quelconque des revendications 2 à 9, caractérisé en ce que, pendant l'étape de bobinage et aiguilletage, la planche à aiguilles (5) frappe avec une fréquence constante.

11. Procédé selon l'une quelconque des revendications 2 à 10, caractérisé en ce que, pendant l'étape de bobinage et aiguilletage, la distance moyenne entre le mandrin (10) et la planche à aiguilles (5) augmente au fur et à mesure que l'épaisseur de l'ensemble des couches bobinées augmente.

12. Procédé selon l'une quelconque des revendications 2 à 10, caractérisé en ce que, les extrémités du mandrin (10) sont des faces planes parallèles l'une à l'autre et inclinées par rapport à une coupe droite du manchon, et que pendant l'étape de bobinage et aiguilletage il y a un déplacement relatif entre le mandrin (10) et la bande (1) de matériau en train d'être bobinée, ce déplacement relatif ayant lieu avec un mouvement de va-et-vient dans la direction longitudinale du mandrin.

13. Un procédé de fabrication d'une pièce annulaire en matériau composite caractérisé en ce qu'il comporte la fabrication d'une préforme (2) selon l'une quelconque des revendications précédentes et la découpe du manchon elliptique en anneaux suivant des plans non perpendiculaires à l'axe du manchon.

14. Procédé selon la revendication 13, caractérisé en ce que l'angle de découpe ($\alpha$) du manchon est choisi pour que les anneaux découpés (4) présentent une section circulaire à leur périphérie intérieure ou à leur périphérie extérieure, ou à un emplacement prédéterminé entre les périphéries intérieure et extérieure.

15. Procédé selon la revendication 14, caractérisé en ce que l'angle de découpe ($\alpha$) du manchon est choisi pour que les anneaux découpés (4) soient circulaires à mi-largeur.

16. Procédé selon la revendication 13, 14 ou 15, caractérisé en ce que la découpe du manchon (2) a lieu après au moins une étape de densification du manchon.

17. Procédé selon la revendication 16, caractérisé en ce que la densification du manchon (2) est réalisée par infiltration chimique en phase vapeur avec gradient de température.

18. Un procédé de fabrication d'un disque de frein caractérisé en ce qu'il comporte la fabrication d'une pièce annulaire (4) selon l'une quelconque des revendications 13 à 17, et l'usinage des périphéries intérieure et/ou extérieure de la pièce annulaire.

19. Procédé selon la revendication 18, caractérisé en ce que, pendant l'étape de bobinage, une bande (1) d'une texture bidirectionnelle de matériau fibreux est enroulée sur le mandrin (10), l'une des directions étant alignée avec la direction d'avance sur le mandrin.

20. Appareil pour la production des préformes pour la fabrication des pièces annulaires en matériau composite, caractérisé en ce qu'il comporte:

un mandrin (10) de section elliptique, et des moyens (600) pour bobiner une bande (1) de matériau fibreux sur le mandrin (10) en couches superposées afin de produire une préforme (2) sous forme de manchon elliptique.

21. Appareil selon la revendication 20, caractérisé en ce qu'il comporte en outre une planche à aiguilles (5) destinée à frapper des couches bobinées simultanément à leur bobinage sur le mandrin elliptique (10) afin de les lier entre elles par aiguilletage.

22. Appareil selon la revendication 21, caractérisé en ce qu'il comporte en outre des moyens (26,28) pour déplacer la planche à aiguilles (5) et/ou le mandrin (10) de telle façon que la surface d'aiguilletage de la planche à aiguilles (5) se trouve dans un plan tangentiel à la partie opposée de la couche bobinée extérieure de la préforme à aiguilleter, au moment de leur contact mutuel.

23. Appareil selon la revendication 22, caractérisé en ce que les moyens (26,28) pour déplacer la planche à aiguilles (5) et/ou le mandrin (10) sont conçus de manière qu'une partie de la couche bobinée extérieure de la préforme reste à tout moment tangente à un plan d'aiguilletage (T) le long d'une ligne de contact (M).

24. Appareil selon la revendication 23, caractérisé en ce que les moyens pour déplacer la planche à aiguilles (5) et/ou le mandrin (10) sont conçus de manière que la position de la ligne de contact (M) dans le plan d'aiguilletage (T) se déplace avec un mouvement de va et vient, la planche à aiguilles (5) se déplaçant pour suivre ce déplacement.

25. Appareil selon la revendication 23, caractérisé en ce que les moyens pour déplacer la planche à aiguilles (5) et/ou le mandrin (10) sont conçus pour déplacer l'axe (S) du mandrin de façon cyclique sur un chemin (Q) comportant deux demi-ellipses tel que la position de la ligne de contact (M) dans le plan d'aiguilletage (T) reste fixe.

26. Appareil selon la revendication 22, caractérisé en ce que les moyens pour déplacer la planche à aiguilles (5) et/ou le mandrin (10) sont conçus pour déplacer le mandrin de façon qu'une partie de la couche bobinée extérieure se trouve à tout moment dans une position d'aiguilletage (M) fixe et la surface d'aiguilletage de la planche à aiguilles (5) change d'orientation afin de rester tangentielle à la partie opposée de la couche bobinée extérieure de la préforme à aiguilleter.

27. Appareil selon la revendication 23, caractérisé en ce que les moyens pour déplacer la planche à aiguilles (5) et/ou le mandrin (10) sont conçus pour déplacer l'axe du mandrin avec un mouvement de va et vient pour l'approcher et l'éloigner du plan ou de la position d'aiguilletage.

28. Appareil selon l'une quelconque des revendications 20 à 27, caractérisé en ce que la planche à aiguilles (5) est adaptée pour frapper avec une fréquence constante.

29. Appareil selon l'une quelconque des revendications 20 à 28, caractérisé en ce qu'il comporte en outre des moyens (26) pour augmenter la distance moyenne entre le mandrin (10) et la planche à aiguilles (5) au fur et à mesure que l'épaisseur de l'ensemble des couches bobinées augmente.

30. Appareil selon l'une quelconque des revendications 20 à 29, caractérisé en ce que, les extrémités du mandrin (10) sont des faces planes parallèles l'une à l'autre et non perpendiculaires à l'axe du manchon, et ce que des moyens sont prévus pour commander un déplacement relatif entre le mandrin (10) et la bande (1) de matériau en cours de bobinage, ce déplacement relatif ayant lieu avec un mouvement de va-et-vient dans la direction longitudinale du mandrin.

**Patentansprüche**

1. Verfahren zum Herstellen von Vorformlingen für die Fertigung von ringförmigen Werkstücken aus Verbundmaterial, gekennzeichnet durch folgende Schritte:

    Bereitstellen eines Wickeldorns (10) elliptischen Querschnitts, und
    Wickeln einer Bahn (1) aus fasrigem Material auf den Wickeldorn (10) zu übereinanderliegenden Lagen, um einen Vorformling in Form einer elliptischen Hülse (2) herzustellen, derart, daß durch Schneiden in zu der Hülsenachse nicht rechtwinkligen Ebenen ringförmige Werkstücke (4) erhalten werden können.

2. Verfahren nach Anspruch 1, dadurch gekennzeichnet, daß die übereinanderliegenden Lagen unter sich durch Nadelung verbunden werden.

3. Verfahren nach Anspruch 2, dadurch gekennzeichnet, daß jede neue Lage gleichzeitig mit ihrem Aufwickeln mit Hilfe eines Nadelbretts (5), welches sich über die Breite der Bahn (1) erstreckt, genadelt wird.

4. Verfahren nach Anspruch 3, dadurch gekennzeichnet, daß im Verlauf des Wickelns und des Nadelns die Bewegungen des Nadelbretts (5) und des Wikkeldorns (10) so sind, daß im Zeitpunkt der Berührung zwischen ihnen die Nadelfläche des Nadelbretts sich in einer Tangentialebene des gegenüberliegenden Teils der zu nadelnden Wickellage befindet.

5. Verfahren nach Anspruch 4, dadurch gekennzeichnet, daß im Verlauf des Wickelns und des Nadelns die Bewegungen des Wickeldorns (10) und des Nadelbretts (5) so sind, daß ein Teil der äußeren Wikkellage zu jedem Zeitpunkt eine Tangente an eine Nadelebene (C) entlang einer Berührungslinie bildet.

6. Verfahren nach Anspruch 5, dadurch gekennzeichnet, daß im Verlauf des Wickelns und des Nadelns die Bewegungen des Wickeldorns (10) und des Nadelbretts so sind, daß die Stelle der Berührungslinie (M) innerhalb der Nadelungsebene (C) sich in einer hin- und hergehenden Bewegung verlagert.

7. Verfahren nach Anspruch 5, dadurch gekennzeichnet, daß im Verlauf des Wickelns und des Nadelns die Stelle der Berührungslinie (M) in der Nadelungsebene (T) ortsfest bleibt, und sich die Achse (S) des Wickeldorns zyklisch auf einem Weg (U) verlagert, der zwei Halbellipsen entspricht.

8. Verfahren nach Anspruch 4, dadurch gekennzeichnet, daß im Verlauf des Wickelns und des Nadelns die Bewegung des Wickeldorns so ist, daß ein Teil der äußeren Wickellage sich in jedem Moment in einer fixen Nadelungsposition (M) befindet und die Nadelungsfläche des Nadelbretts (5) ihre Orientierung so ändert, daß sie als Tangente an dem gegenüberliegenden Teil der zu nadelnden Lage verbleibt.

9. Verfahren nach Anspruch 6 oder 8, dadurch gekennzeichnet, daß im Verlauf des Wickelns und des Nadelns der Wickeldorn (10) sich um seine Achse dreht und gleichzeitig die Achse (S) des Wickeldorns sich in einer hin- und hergehenden Bewegung verlagert, um sich bezüglich der Ebene oder der Stelle der Nadelung anzunähern oder zu entfernen.

10. Verfahren nach einem der Ansprüche 2 bis 9, dadurch gekennzeichnet, daß im Verlauf des Wickelns und des Nadelns das Nadelbrett (5) mit einer konstanten Frequenz schlägt.

11. Verfahren nach einem der Ansprüche 2 bis 10, dadurch gekennzeichnet, daß im Verlauf des Wickelns und des Nadelns der mittlere Abstand zwischen dem Wickeldorn (10) und dem Nadelbrett (5) sich nach Maßgabe der Dickenzunahme des aufgewikkelten Lagenwickels erhöht.

12. Verfahren nach einem der Ansprüche 2 bis 10, dadurch gekennzeichnet, daß die Enden des Wickeldorns (10) zueinander parallele Stirnflächen bilden, die bezüglich einem rechtwinkligen Querschnitt der Hülse geneigt sind, und daß es im Verlauf des Wikkelns und des Nadelns eine Relativverlagerung zwischen dem Wickeldorn (10) und der im Aufwikkeln begriffenen Materialbahn (1) gibt, wobei diese relative Verlagerung einhergeht mit einer Hin- und Herbewegung in Längsrichtung des Wickeldorns.

13. Verfahren zum Herstellen eines ringförmigen Werkstücks aus Verbundmaterial, dadurch gekennzeichnet, daß es die Herstellung eines Vorformlings (2) nach einem der vorhergehenden Ansprüche beinhaltet, außerdem das Schneiden der elliptischen Hülse zu Ringen gemäß Ebenen, die zu der Hülsenachse nicht rechtwinklig verlaufen.

14. Verfahren nach Anspruch 13, dadurch gekennzeichnet, daß der Schnittwinkel ($\alpha$) der Hülse so gewählt ist, daß die geschnittenen Ringe (4) an ihrem Innenumfang oder ihrem Außenumfang, oder an einem vorbestimmten Ort zwischen Innen- und Außenumfang einen kreisförmigen Querschnitt aufweisen.

15. Verfahren nach Anspruch 14, dadurch gekennzeichnet, daß der Schnittwinkel ($\alpha$) der Hülse so gewählt ist, daß die geschnittenen Ringe (4) auf halber Breite kreisförmig sind.

16. Verfahren nach Anspruch 13, 14 oder 15, dadurch gekennzeichnet, daß das Schneiden der Hülse (2) erfolgt, nachdem zumindest eine Verdichtungsphase der Hülse stattgefunden hat.

17. Verfahren nach Anspruch 16, dadurch gekennzeichnet, daß die Verdichtung der Hülse (2) durch chemisches Infiltrieren aus der Dampfphase mit einem Temperaturgradienten durchgeführt wird.

18. Verfahren zum Herstellen einer Bremsscheibe, dadurch gekennzeichnet, daß es die Fertigung eines ringförmigen Werkstücks (4) nach einem der Ansprüche 13 bis 17 beinhaltet, außerdem die materialabtragende Bearbeitung von Innen- und/oder Außenumfang des ringförmigen Werkstücks.

19. Verfahren nach Anspruch 18, dadurch gekennzeichnet, daß im Verlauf des Wickelns eine Bahn (1) aus faserförmigem Material mit bidirektionaler Struktur auf den Wickeldorn (10) aufgewickelt wird, wobei eine der Richtungen mit der Vorschubrichtung auf dem Wickeldorn ausgerichtet ist.

20. Vorrichtung zum Herstellen von Vorformlingen für die Fertigung von ringförmigen Werkstücken aus Verbundmaterial, gekennzeichnet durch:

   einen Wickeldorn (10) elliptischen Querschnitts, und
   Mittel (600) zum Wickeln einer Bahn (1) aus faserförmigem Material auf den Wickeldorn (10) in übereinanderliegenden Lagen, um einen Vorformling (2) in Gestalt einer elliptischen Hülse herzustellen.

21. Vorrichtung nach Anspruch 20, dadurch gekennzeichnet, daß sie außerdem ein Nadelbrett (5) aufweist, das dazu dient, gleichzeitig mit ihrem Aufwikkeln auf den elliptischen Wickeldorn (10) auf die Wickellagen zu schlagen, um sie durch Nadelung untereinander zu verbinden.

22. Vorrichtung nach Anspruch 21, dadurch gekennzeichnet, daß sie außerdem Mittel (25, 28) zum Verlagern des Nadelbretts (5) und/oder des Wickeldorns (10) in der Weise aufweist, daß die Nadelungsfläche des Nadelbretts (5) sich in einer Tangentialebene bezüglich eines gegenüberliegenden Teils der äußeren Wickellage des zu nadelnden Vorformlings befindet, wenn gegenseitige Berührung besteht.

23. Vorrichtung nach Anspruch 22, dadurch gekennzeichnet, daß die Mittel (26, 28) zum Verlagern des Nadelbretts (5) und/oder des Wickeldorns (10) in der Weise ausgestaltet sind, daß ein Teil der äußeren Wickellage des Vorformlings in jedem Zeitpunkt eine Tangente bezüglich einer Nadelungsebene (T) entlang einer Berührungslinie (M) bildet.

24. Vorrichtung nach Anspruch 23, dadurch gekennzeichnet, daß die Mittel zum Verlagern des Nadelbretts (5) und/oder des Wickeldorns (10) derart ausgestaltet sind, daß die Stelle der Berührungslinie (M) in der Nadelungsebene (T) sich in einer hin- und hergehenden Bewegung verlagert, wobei das Nadelbrett (5) sich verlagert, um jener Verlagerung zu folgen.

25. Vorrichtung nach Anspruch 23, dadurch gekennzeichnet, daß die Mittel zum Verlagern des Nadelbretts (5) und/oder des Wickeldorns (10) derart ausgebildet sind, daß die Achse (S) des Wickeldorns zyklisch auf einem Weg (Q) verlagert wird, der zwei Halbellipsen entspricht, so daß die Stelle der Linienberührung (M) in der Nadelungsebene (T) ortsfest bleibt.

26. Vorrichtung nach Anspruch 22, dadurch gekennzeichnet, daß die Mittel zum Verlagern des Nadelbretts (5) und/oder des Wickeldorns (10) derart ausgebildet sind, daß der Wickeldorn so verlagert wird, daß ein Teil der äußeren Wickellage sich zu jedem Zeitpunkt in einer ortsfesten Nadelungsposition (M) befindet und die Nadelungsfläche des Nadelbretts (5) ihre Orientierung in der Weise ändert, daß sie in dem der äußeren Wickellage des zu nadelnden Vorformlings gegenüberliegenden Teil tangential verbleibt.

27. Vorrichtung nach Anspruch 23, dadurch gekennzeichnet, daß die Mittel zum Verlagern des Nadelbretts (5) und/oder des Wickeldorns (10) dazu ausgebildet sind, die Achse des Wickeldorns in einer hin- und hergehenden Bewegung zu verlagern, um sie an die Ebene oder Stelle der Nadelung anzunähern oder davon abzurücken.

28. Vorrichtung nach einem der Ansprüche 20 bis 27, dadurch gekennzeichnet, daß das Nadelbrett (5) dazu ausgebildet ist, mit einer konstanten Frequenz zu schlagen.

29. Vorrichtung nach einem der Ansprüche 20 bis 28, dadurch gekennzeichnet, daß sie außerdem Mittel (26) zum Erhöhen des mittleren Abstands zwischen dem Wickeldorn (10) und dem Nadelbrett (5) nach Maßgabe der Dickenzunahme des Lagenwickels aufweist.

30. Vorrichtung nach einem der Ansprüche 20 bis 29, dadurch gekennzeichnet, daß die äußeren Enden des Wickeldorns (10) zueinander parallele Stirnflächen sind, die bezüglich der Wickeldornachse nicht rechtwinklig sind, und daß Mittel vorgesehen sind, um eine relative Verlagerung zwischen dem Wickeldorn (10) und der Materialbahn (1) im Verlauf des Wickelvorgangs zu veranlassen, wobei diese relative Verlagerung einhergeht mit einer hin- und hergehenden Bewegung in Längsrichtung des Wickeldorns.

**Claims**

1. A method of producing preforms for producing annular parts of composite material, characterized in that it comprises the following steps:

   providing a mandrel (10) with an elliptical cross section; and
   winding a strip (1) of fibrous material on the mandrel (10) in superposed layers to produce a preform in the form of an elliptical sleeve (2), such that annular parts (4) can be obtained after cutting along planes which are not perpendicular to the sleeve axis.

2. A method according to claim 1, characterized in that the superposed layers are connected to each other by needling.

3. A method according to claim 2, characterized in that each new layer is needled simultaneously with its winding, using a needle board (5) extending over the width of the strip (1).

4. A method according to claim 3, characterized in that during the winding and needling step the motions of the needle board (5) and of the mandrel (10) are such that at the moment of contact between them the needling surface of the needle board is in a plane which is tangential to the facing portion of the wound layer to be needled.

5. A method according to claim 4, characterized in that during the winding and needling step the motions of the mandrel (10) and of the needle board (5) are such that a portion of the outer wound layer is always tangential to a needling plane (T) along the length of a contact line (M).

6. A method according to claim 5, characterized in that during the winding and needling step, the motions of the mandrel (10) and of the needle board (5) are such that the position of the contact line (M) in the needling plane (T) is displaced with reciprocating motion.

7. A method according to claim 5, characterized in that during the winding and needling step, the position of the contact line (M) in the needling plane (T) remains fixed, the axis (S) of the mandrel being periodically moved along a path (Q) comprising two half-ellipses.

8. A method according to claim 4, characterized in that during the winding and needling step, the motion of the mandrel (10) is such that a portion of the outer wound layer is always in a fixed needling position (M) and the needling surface of the needle board (5) changes orientation in order to remain tangential to the facing portion of the layer to be needled.

9. A method according to claim 6 or 8, characterized in that during the winding and needling step, the mandrel (10) rotates about its axis and, at the same time, the axis (S) of the mandrel is displaced with reciprocating motion to approach and move away from the plane or needling position.

10. A method according any one of claims 2 to 9, characterized in that during the winding and needling step, the needle board (5) strikes at a constant frequency.

11. A method according to any one of claims 2 to 10, characterized in that during the winding and needling step, the average distance between the mandrel (10) and the needle board (5) increases as the thickness of the assembly of wound layers increases.

12. A method according to any one of claims 2 to 10, characterized in that the ends of the mandrel (10) are planar faces which are mutually parallel and inclined relative to a right cross section of the sleeve, and that during the winding and needling step there is a relative displacement between the mandrel (10) and the strip (1) of material in the process of being wound, said relative displacement taking place with reciprocating motion in the longitudinal direction of the mandrel.

13. A method of producing an annular part of composite material, characterized in that it comprises manufacture of a preform (2) according to any one of the preceding claims and cutting the elliptical sleeve into rings along planes which are not perpendicular to the sleeve axis.

14. A method according to claim 13, characterized in that the cutting angle ($\alpha$) of the sleeve is selected so that the cut rings (4) have a circular cross section at their inner periphery or at their outer periphery, or at a predetermined position between the inner and outer peripheries.

15. A method according to claim 14, characterized in that the cutting angle ($\alpha$) of the sleeve is selected so that the cut rings (4) are circular at their half-width.

16. A method according to claim 13, 14 or 15, characterized in that the sleeve (2) is cut after at least one sleeve densification step.

17. A method according to claim 16, characterized in that the sleeve (2) is densified by temperature gradient chemical vapor infiltration.

18. A method of producing a brake disk, characterized in that it comprises producing an annular part (4) according to any one of claims 13 to 17, and machining the inner and/or outer peripheries of the annular part.

19. A method according to claim 18, characterized in that during the winding step, a two-directional fibrous material fabric strip (1) is wound on the mandrel (10), one of its directions being aligned with the feed direction of the mandrel.

20. Apparatus for producing preforms for producing annular parts of composite material, characterized in that it comprises:

a mandrel (10) of elliptical cross section; and means (600) for winding a fibrous material strip (1) on the mandrel (10) in superposed layers to produce a preform (2) in the form of an elliptical sleeve.

21. Apparatus according to claim 20, characterized in that it further comprises a needle board (5) for striking layers while they are simultaneously being wound onto the elliptical mandrel (10), thereby connecting the layers together by needling.

22. Apparatus according to claim 21, characterized in that it further comprises means (26, 28) for moving the needle board (5) and/or the mandrel (10) such that the needling surface of the needle board (5) is in a plane tangential to the facing portion of the outer wound layer of the preform to be needled, at the moment of their mutual contact.

23. Apparatus according to claim 22, characterized in that the means (26, 28) for moving the needle board (5) and/or mandrel (10) are designed such that at all times, a portion of the outer wound layer of the preform is tangential to a needling plane (T) along the length of a contact line (M).

24. Apparatus according to claim 23, characterized in that the means for moving the needle board (5) and/or the mandrel (10) are arranged such that the position of the contact line (M) in the needling plane (T) is displaced with reciprocating motion, the needle board (5) displacing to follow the displacement.

25. Apparatus according to claim 23, characterized in that the means for moving the needle board (5) and/or the mandrel (10) are arranged such that the axis (S) of the mandrel is periodically moved along a path (Q) comprising two half-ellipses so that the position of the contact line (M) in the needling plane (T) remains fixed.

26. Apparatus according to claim 22, characterized in that the means for moving the needle board (5) and/or the mandrel (10) are arranged to move the mandrel so that at any moment, a portion of the outer wound layer is in a fixed needling position (M) and the needling surface of the needle board (5) changes its orientation so as to remain tangential to the facing portion of the outer wound layer of the preform to be needled.

**27.** Apparatus according to claim 23, characterized in that the means for moving the needle board (5) and/ or the mandrel (10) are arranged to move the axis of the mandrel with reciprocating motion to approach and move away from the needling plane or position.

**28.** Apparatus according to any one of claims 20 to 27, characterized in that the needle board (5) is adapted to strike with constant frequency.

**29.** Apparatus according to any one of claims 20 to 28, characterized in that it further comprises means (26) for increasing the average distance between the mandrel (10) and the needle board (5) as the thickness of the wound layer assembly increases.

**30.** Apparatus according to any one of claims 20 to 29, characterized in that the ends of the mandrel (10) are planar faces which are parallel to each other and not perpendicular to the sleeve axis, and in that means are provided to control relative displacement between the mandrel (10) and the strip (1) during winding, the relative displacement taking place with reciprocating motion in a longitudinal direction of the mandrel.

(A)  (B)  (C)  (D)

FIG_1

(A)  (B)  (C)  (D)

FIG_2

EP 0 833 972 B1

```
                    ┌──────────┐
                    │  DEBUT   │
                    └──────────┘
                         │
                         ▼
                 ┌─────────────────┐
                 │   BOBINAGE      │
                 │       E1        │
                 ├─────────────────┤
                 │  AIGUILLETAGE   │
                 │       E1'       │
                 └─────────────────┘
                         │
                         ▼
        ┌ ─ ─ ─ ─ ─ ─ ─ ─ ─ ─ ─ ─ ─ ─ ─┐
        │                               ▼
┌─────────────────┐           ┌─────────────────┐
│  DENSIFICATION  │           │  CONSOLIDATION  │
│       E2        │           │       E2'       │
└─────────────────┘           └─────────────────┘
        │                              │
        ▼                              ▼
┌─────────────────┐           ┌─────────────────┐
│   DECOUPE       │           │   DECOUPE       │
│       E3        │           │       E3'       │
└─────────────────┘           └─────────────────┘
        │                              │
        │                              ▼
        │                     ┌─────────────────┐
        │                     │  DENSIFICATION  │
        │                     │       E2"       │
        │                     └─────────────────┘
        │                              │
        │ ◄ ─ ─ ─ ─ ─ ─ ─ ─ ─ ─ ─ ─ ─ ┘
        ▼
┌─────────────────┐
│    USINAGE      │
│       E4        │
└─────────────────┘
        │
        ▼
┌─────────────────┐
│  USINAGE SUPP.  │
│       E5        │
└─────────────────┘
        │
        ▼
   ┌──────────┐
   │   FIN    │
   └──────────┘
```

FIG_3

FIG_4

FIG_5

FIG_6

FIG_7

FIG_8

FIG_9

FIG_10

FIG_11

EP 0 833 972 B1